# EUROPÄISCHE PATENTSCHRIFT

(11) **EP 1 261 820 B1**
(45) Veröffentlichungstag und Bekanntmachung des Hinweises auf die Patenterteilung: **09.08.2006**
(21) Anmeldenummer: 01917030.7
(22) Anmeldetag: 26.02.2001
(51) Int. Cl.: F16J 15/447

(54) **LABYRINTHDICHTUNG ZWISCHEN DREHBAREN BAUTEILEN**
LABYRINTH SEAL BETWEEN ROTATING PARTS
GARNITURE D'ETANCHEITE EN FORME DE LABYRINTHE PLACEE ENTRE DES PIECES ROTATIVES

(30) Priorität: 07.03.2000 DE 10011063
(43) Veröffentlichungstag der Anmeldung: 04.12.2002
(73) Patentinhaber: Bombardier Transportation GmbH, 13627 Berlin (DE)
(72) Erfinder: SKUMAWITZ, Erwin, 14621 Schönheide (DE); HALLMANN, Dieter, 10779 Berlin (DE)
(74) Vertreter: Karlhuber, Mathias
(86) Internationale Anmeldenummer: PCT/EP2001/002152
(87) Internationale Veröffentlichungsnummer: WO 2001/066983

(56) Entgegenhaltungen:
- EP-A- 0 608 672
- GB-A- 274 049
- US-A- 5 029 876

## Beschreibung

Die Erfindung betrifft eine Labyrinthdichtung gemäß dem Oberbegriff des ersten Anspruchs .

Eine aus DE 44 03 776 A1 bekannte Labyrinthdichtung dieser Art kommt im Bereich eines Kugellagers am Übergang von einem Antriebsmotor zu einem daran angeflanschten Getriebe zur Anwendung. Dabei ist ein gehäusefestes Bauteil mit radial nach innen gerichteten, parallel zueinander angeordneten und gleiche Innendurchmesser aufweisenden Ringelementen ausgestattet. Auf der Ankerwelle des Antriebsmotors sitzt ein weiteres ringförmiges Bauteil, das im Bereich der Stirnflächen der einzelnen Ringelemente dazu benachbarte zylindrische Dichtflächen aufweist. Dieses weitere Bauteil trägt zudem radial nach außen gerichtete Abschleuderstege, welche zwischen Ringelemente greifen. Die Stirnflächen der Ringelelemente sind im Durchmesser geringfügig größer als der Durchmesser der zugeordneten zylindrischen Dichtfläche, so daß ein umlaufender hohlzylindrischer enger Dichtungsringspalt zwischen der jeweiligen Stirnfläche und der zugeordneten Dichtfläche gebildet ist. Die Stirnfläche und die Dichtfläche bilden somit die innere und die äußere Mantelfläche des jeweils zugehörigen Dichtungsringspaltes. In der Praxis zeigt es sich, daß ein absoluter Rundlauf der Dichtflächen nicht zu erreichen ist. Aufgrund derartiger technisch unvermeidbarer Form-und Lagefehler ändert sich dadurch die ohnehin nur sehr geringe Breite des Dichtungsringspaltes dynamisch mit der Umlauffrequenz. Gelangt daher beispielsweise Öl, gegebenenfalls in Tropfenform oder als Ölschaum, vom Kugellager in die Labyrinthdichtung und damit an die Dichtungsringspalte, dann wirkt die exzentrisch umlaufende Dichtfläche nach Art einer Pumpe und fördert somit die aufgetretene Verschmutzung durch den Dichtungsringspalt hindurch und kann so bis zum Motor gelangen und dort Störungen verursachen. Um diesen Mangel zu vermeiden, ist in die Labyrinthanordnung ein Entspannungsbereich integriert, der über einen Kanal an einen als Venturi-Düse wirksamen Diffusor angeschlossen ist, welcher mit der Außenathmosphäre in Verbindung ist.

Aus der US 5,029,876 ist eine Labyrinthdichtung bekannt, die im Zusammenhang mit der Kühlung von der Komponenten von Gasturbinen zum Einsatz kommt, wobei ein definierter Kühlluftstrom von einer Hochdruckseite als Leckagestrom durch die Labyrinthdichtung hindurch geführt wird, um an einer jenseits der Labyrinthdichtung liegenden Komponente eine Kühlwirkung zu erzielen.

Aus der GB 274 049 A ist eine gattungsgemäße Labyrinthdichtung für Zentrifugalpumpen, Dampf- oder Wasserturbinen bekannt, bei der über zur Drehachse geneigte Dichtungsringspalte eine dem Leckagestrom aus der Hochdruckseite entgegenwirkende Pumpwirkung erzeugt wird.

Aus der EP 0 608 672 A1 ist ebenfalls eine gattungsgemäße Labyrinthdichtung für eine ölgeschmierte Wälzlageranordnung bekannt, bei der ebenfalls über zur Drehachse geneigte Dichtungsringspalte ein Leckagestrom aus dem Inneren des Lagergehäuses vermieden werden soll.

Bei diesen beiden gattungsgemäßen Labyrinthdichtungen besteht das Problem, dass besonders genaue Betriebsbedingungen, insbesondere genaue Druckbedingungen zu beiden Seiten der Labyrinthdichtung eingehalten werden müssen, um sicherzustellen, dass zum einen das Medium, gegen das abgedichtet werden soll, nicht aus dem Gehäuseinneren nach außen gelangt, gleichermaßen aber auch das Eindringen von Verschmutzungen in die Dichtung oder gar in das Gehäuseinnere verhindert wird. Dies erfordert unter anderem eine sehr aufwändige exakte Auslegung der Bauteile.

Der vorliegenden Erfindung liegt vor diesem Hintergrund die objektive Aufgabe zu Grunde, eine Labyrinthdichtung zur Verfügung zu stellen, die bei wechselnden Betriebsbedingungen auf einfache Weise eine zuverlässige Trennung zwischen den Räumen zu beiden Seiten der Dichtung ermöglicht.

Die Lösung dieser Aufgabe erfolgt gemäß der Erfindung durch die im Kennzeichen des Anspruchs 1 angegebene Maßnahme.

Bei einem Aufbau einer Labyrinthdichtung gemäß der Erfindung wird aufgrund der konischen Gestaltung des Dichtungsringspaltes in bezug auf die axiale Pumpwirkung, welche sich durch die bereits erwähnten dynamischen Veränderungen des Dichtungsringspaltes infolge Unrundheiten einstellt, zusätzlich eine radiale Komponente im Dichtungsringspalt erzeugt. Diese radiale Komponente der Pumpwirkung ist abhängig von der Drehzahl, dem Durchmesser und der radialen Ausdehnung sowie der Neigung des konischen Dichtungsringspaltes in Achsrichtung. Vorzugsweise ist die radiale Spaltbreite über die axiale Erstreckung gleich groß. Es ergibt sich dann ein Dichtungsringspalt in Hohlkegelstumpfform. Es ist jedoch auch möglich, nur eine der Mantelflächen des Dichtungsringspaltes, also entweder die Stirnfläche des Ringelements oder die Dichtfläche am zugeordneten weiteren Bauteil, konisch zu neigen. Auch können beide vorgenannte Mantelflächen gegenüber der Achsrichtung gegenläufig geneigt sein. Es kann auch zweckmäßig sein, wenn sich die Neigung der vorgenannten Mantelflächen nur über einen Teil ihrer axialen Ausdehnung erstreckt. Für die Größe der Pumpwirkung ist dabei insbesondere die Neigung der äußeren Mantelfläche des Dichtungsringspaltes maßgeblich. Dabei ist die Pumpwirkung zu dem Ende des Dichtungsringspaltes hin gerichtet, das den größeren Durchmesser aufweist. Der größere Durchmesser des Dichtungsringspaltes wird somit zu der Seite hin angeordnet, von welcher störende Fluide, insbesondere Öl, Wasser oder dergleichen, zur Labyrinthdichtung hinströmen kann. Für die Pumpwirkung kann dabei die auf das zurückzuhaltende Fluid ausgeübte radiale Fliehkraft von Bedeutung sein, die in den Dichtungsringspalt eingedrungenes Fluid nach außen fördert. An der geneigten äußeren Mantelfläche tritt dann eine Strömungskomponente auf, welche der durch den unrunden Lauf erzeugten axialen Pumpwirkung in bezug auf das zuströmende Fluid entgegenwirkt. Durch Wahl der Kegelneigung und Drehzahl kann dabei die Größe der entgegenwirkenden Kraftkomponente eingestellt werden. Um den Durchmesser des mit den Dichtflächen ausgerüsteten Bauteils möglichst klein halten zu können, sind axial aufeinander folgende kegelstumpfförmige Dichtflächen im Längsschnitt gesehen sägezahnartig einander zugeordnet, so daß der mittlere Durchmesser zumindest annähernd gleich groß gestaltet werden kann. Es ist auch möglich, die Labyrinthdichtung mit Dichtungsringspalten zu versehen, die gegenläufig geneigt sind. Es kann dann beispielsweise aus einem im mittleren axialen Bereich belüfteten Abschnitt der Labyrinthdichtung dem Eindringen von Fluiden von beiden Endbereichen her entgegengewirkt werden. Daneben können einer gemeinsamen Dichtfläche auch mehrere Ringflächen gegenüber stehen. Auch ist es zweckmäßig, zumindest zwischen einigen benachbarten Dichtflächen radial nach außen gerichtete Abschleuderringe vorzusehen, welche zwischen zugehörige benachbarte Ringelemente ragen und durch die Dichtungsringspalte hindurchgedrungene Fluide radial in die zwischen den zugehörigen Ringelementen vorgesehenen Auffangnuten abschleudern. Das abgeschleuderte Fluid kann dann durch einen gemeinsamen Sammelkanal abgeführt werden.

Die Erfindung ist nachfolgend anhand eines in der Zeichnung dargestellten Ausführungsbeispiels einer Labyrinthdichtung näher erläutert.

Es zeigen:
- Fig. 1: einen Längsschnitt durch eine am Lagerschild eines Motors festgesetzte Labyrinthdichtung und
- Fig. 2: eine vergrößerte Darstellung der Ringdichtung im Bereich eines Dichtungsringspalts.

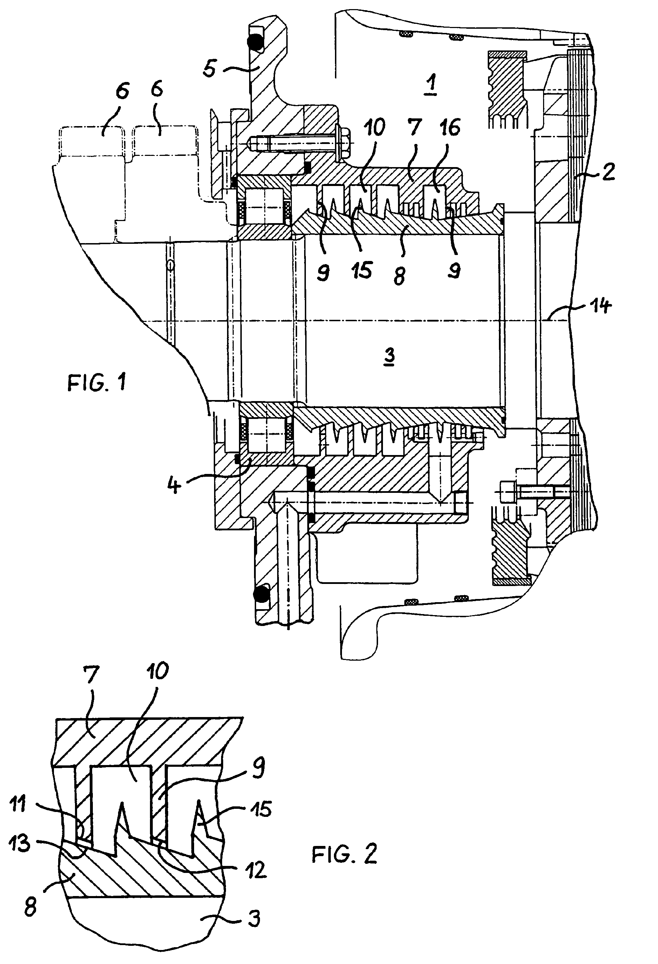

Gemäß Fig. 1 ist im Innenraum 1 eines feststehenden Gehäuse eines Elektromotors ein Anker 2 auf einer Welle 3 festgesetzt. Die Welle 3 ist über ein Wälzlager 4 in einem Lagerschild 5 des Gehäuses drehbar gelagert. Das aus dem Innenraum 1 des Gehäuses nach außen ragende Ende der Welle 3 steht in Antriebsverbindung mit einem unmittelbar an dem Lagerschild 5 anschließenden mechanischen Getriebe, von dem lediglich eine Anordnung von Getrieberädern 6 gezeigt ist. Die Getrieberäder 6 laufen in einem nicht dargestellten Ölbad. Die von den Getrieberädern 6 transportierte Ölmenge dient auch der Schmierung des Wälzlagers 4. Um dabei zu vermeiden, daß das Getriebeöl, welches durch das Wälzlager 4 axial hindurchwandert, in den Innenraum 1 des Motorgehäuses gelangt, ist axial anschließend an das Wälzlager 4 eine sich in axialer Richtung zum Anker 2 erstreckende mehrkammerige Labyrinthdichtung angeordnet. Die Labyrinthdichtung besteht aus einem hülsenförmigen inneren Bauteil 8 auf, das auf der Welle 3 festgesetzt ist und mit der Welle 3 umläuft, und aus einem das innere Bauteil 8 schalenförmig umgebenden äußeren Bauteil 7, das fest mit dem Lagerschild 5 verbunden ist. An der Innenwand des äußeren Bauteils 7 befinden sich radial nach innen gerichtete Ringelemente 9, die mit axialem Abstand voneinander angeordnet sind und zwischen welchen sich Hohlräume 10 mit U-förmigem Querschnitt befinden. Wie in Fig. 2 veranschaulicht stehen die radial nach innen weisenden Stirnflächen 11 der Ringelemente 9 unter Bildung eines Dichtungsringspaltes 12 eng benachbart und berührungslos jeweils einer Dichtfläche 13 gegenüber, die an der Außenwand des hülsenförmigen, mit der Welle 3 umlaufenden Bauteils 8 ausgebildet ist. Nachdem die Dichtfläche 13 unter praktischen Betriebsbedingungen nicht exakt rund läuft, verändert sich die in radialer Richtung gemessene Breite des Dichtungsringspaltes 12 mit der Umlauffrequenz der Welle 3. Dies bewirkt im Dichtungsringspalt 12, daß zum Beispiel vom Wälzlager 4 herrührendes Schmieröl trotz der sehr gering gehaltenen Spaltbreite durch den Dichtungsringspalt 1 2 hindurchgepumpt wird.

Um den unerwünschten Durchsatz von Fluid durch den Dichtungsringspalt 1 2 zu vermindern, ist derselbe konisch ausgebildet. Hierzu ist vorliegend sowohl die Stirnfläche 11 am Ringelement 9 als auch die zugeordnete Dichtfläche 13 konisch ausgebildet. Die Neigung an der Stirnfläche 11 und der Dichtfläche 13 sind hier gegenüber der angedeuteten Achse 14 der Welle 3 gleich groß und in gleicher Richtung gewählt. Der Dichtungsringspalt 12 weist damit die Form eines Hohlkegelstumpfes auf, dessen Durchmesser sich entgegen der Richtung erweitert, aus der das zurückzuhaltende Fluid, vorliegend Schmieröl, zuwandert. Bei drehender Welle 3 und mitdrehender Dichtfläche 13 wird bis an den Dichtungsringspalt 12 vorgedrungenes Fluid beim Eindringen in den Dichtungsringspalt 12 radial nach außen beschleunigt und erfährt an der zugeordneten geneigeten Stirnfläche 11 eine Ablenkung, die eine gegen die zur Zuströmrichtung des Fluids weisende Kraftkomponente besitzt. Durch Wahl der Neigung kann unter Berücksichtigung der Drehzahl der Welle 3 die Kraftkomponente so gewählt werden, daß der durch den unrunden Lauf erzeugten Pumpwirkung im Dichtungsringspalt 12 entgegengewirkt und diese zumindest teilweise kompensiert wird. Durch mehrfache Ausbildung einer in dieser Weise gestalteten Labyrinth-Spaltdichtung kann der Fluiddurchsatz durch eine entsprechend ausgebildete Labyrinthdichtung zumindest soweit reduziert werden, daß Zusatzmaßnahmen nicht erforderlich sind beziehungsweise bei gleicher Dichtwirkung gegenüber Anordnungen mit rein zylindrischem Dichtungsringspalt nur eine verminderte Anzahl von Dichtungsringspalten 12 aus Ringelement 9 und Dichtfläche 13 erforderlich ist.

Abweichend von der dargestellten Ausführungsform, bei welcher die konischen Mantelflächen 11 und 13 des Dichtungsringspaltes 12 gleiche Neigung aufweisen, kann es auch genügen, nur die Stirnfläche 11 oder die Dichtfläche 13 konisch auszubilden, wobei jedoch die Richtung der daraus resultierenden Kraftkomponente in Bezug auf das angestrebte verbesserte Dichtungsverhältnis beachtet werden muß.

Um die radiale Wandstärke des inneren Bauteils 8 so gering wie möglich halten zu können, wird der mittlere Durchmesser von zumindest zwei benachbart angeordneten, konischen Dichtungsringspalten 12 zumindest annähernd gleich groß gewählt. Die zugehörigen axial nebeneinander am drehbar gelagerten Bauteil 8 vorgesehenen kegelstumpfförmigen Dichtflächen 13 bilden dabei im axialen Längsschnitt eine Sägezahnform.

Um das Abschleudern von dennoch durch den Dichtungsringspalt 12 gedrungenem Fluid zu verbesseren, sind im Bereich der Sägezahnspitzen jeweils zwischen benachbarten Dichtflächen 13 radial nach außen gerichtete Abschleuderringe 15 vorgesehen, die zwischen zugehörige benachbarte Ringelemente 9 ragen.

Wenn die Möglichkeit besteht, daß unerwünschte Fluide von beiden Seiten der Dichtung aus eindringen können, ist es zweckmäßig, Dichtungsringspalte 12 mit gegenläufiger Neigung an axialen Endbereichen der Labyrinthdichtung vorzusehen. Im Ausführungsbeispiel ist der dem Anker 2 zugewandte Endabschnitt des inneren Bauteils 8 demgemäß mit einer Dichtfläche 13 versehen, deren Neigung gegenüber der Achse 14 gegenläufig zu der Neigung der Dichtfläche 13 am gegenüberliegenden, dem Getriebe zugewandten Ende der Labyrinthdichtung ausgebildet ist. Dementsprechend sind aber auch die Stirnflächen 11 der zugeordneten Ringelemente 9 gegenläufig geneigt. Zwischen den Bereichen mit gegenläufiger Neigung der Dichtungsringspalte 12 ist vorliegend eine Neutralkammer 16 in die Labyrinthdichtung eingefügt, aus der eingedrungenes Fluid nach außen abgeführt wird. Dagegen kann aus dem Hohlraum 10, die dem Getriebe zugewandt sind, das darin abgeschiedene Fluid, vorliegend also Getriebeöl, wieder zurück zum Wälzlager 4 beziehungsweise in das Getriebe geführt werden.

Es ist im Übrigen auch möglich, wenigstens zwei Ringelemente 9 einer gemeinsamen Dichtfläche 13 zuzuordnen, wie es im Ausführungsbeispiel nach Fig. 1 beiderseits der Neutralkammer 16 dargestellt ist.

Insgesamt wird durch die konische Gestaltung des Dichtungsringspaltes 12 eine Verbesserung der Dichtwirkung ohne zusätzlichen Bauraum oder andere Hilfsmittel erreicht. Andererseits können durch die dadurch ausnutzbare Kraftkomponente die Anforderungen an die Drosselwirkung des Dichtungsringspaltes 12 verringert werden, es kann also gegebenenfalls die radiale Spaltbreite vergrößert werden, so daß die Herstellung der Bauteile mit verminderter Präzision erfolgen kann. Bei vergrößerter Spaltbreite verringert sich auch seine relative dynamische Änderung bei rotierender Welle 3, was wiederum zur Verringerung des unerwünschten Pumpeffekts von der Seite des zufließenden Öls der gegenüberliegenden Seite führt. Dabei braucht der Durchmesser des inneren Bauteils 8 trotz konischer Gestaltung der Dichtfläche 13 nicht vergrößert zu werden, wenn die Dichtflächen 13 im Längsschnitt gesehen sägezahnartig axial aneinandergefügt werden. Das äußere Bauteil 7 zusammen mit den Ringstegen 9 ist aus Montagegründen geteilt ausgeführt, während das innere Bauteil 8 mit den Dichtflächen 13 und den Abschleuderringen 15 eine einteilige Baueinheit ist. Beide Bauteile 7 und 8 sind gegeneinander verdrehbar, axial jedoch bis auf betriebsbedingte Verlagerungen fixiert. Auch ist der unmittelbar einer Stirnfläche 11 zugeordnete Teil der betreffenden Dichtfläche 13 in axialer Richtung ohne Unterbrechung ausgebildet.

## Patentansprüche

1. Labyrinthdichtung zwischen relativ zueinander um eine Achse (14) drehbaren, axial festgelegten Bauteilen (7, 8) mit zumindest zwei axial hintereinander angeordneten ringförmigen, ununterbrochenen Dichtungsringspalten (12) zwischen je einer Stirnfläche (11) eines an einem Bauteil (7) angeordneten Ringelements (9) und einer berührungslos eng benachbart gegenüberstehenden Dichtfläche (13) am anderen Bauteil (8), wobei die Stirnfläche (11) und die Dichtfläche (13) die Mantelflächen des zugehörigen Dichtungsringspalts (12) bilden, wobei wenigstens eine Mantelfläche (11, 13) zumindest eines Dichtungsringspaltes (12) konisch ausgebildet ist, **dadurch gekennzeichnet, dass** zum Erzeugen einer Gegenwirkung gegen das Eindringen von Fluiden von beiden Enden der Labyrinthdichtung Stirnflächen (11) und Dichtflächen (13) von Dichtungsringspalten (12) an einem Ende der Labyrinthdichtung mit gegenläufiger Neigung zu Stirnflächen (11) und Dichtflächen (13) von Dichtungsringspalten (12) am anderen Ende der Labyrinthdichtung ausgebildet sind.

2. Labyrinthdichtung nach Anspruch 1, **dadurch gekennzeichnet, dass** eine Stirnfläche (11) konisch ausgebildet ist.

3. Labyrinthdichtung nach Anspruch 1 oder 2, **dadurch gekennzeichnet, dass** eine Dichtfläche (13) konisch ausgebildet ist.

4. Labyrinthdichtung nach wenigstens einem der Ansprüche 1 bis 3, **dadurch gekennzeichnet, dass** beide - Mantelflächen (11, 13) eines Dichtungsringspaltes (12) konisch ausgebildet sind und die gleiche Neigung aufweisen.

5. Labyrinthdichtung nach wenigstens einem der Ansprüche 1 bis 4, **dadurch gekennzeichnet, dass** die mittleren Durchmesser von zumindest zwei benachbart angeordneten konischen Dichtungsringspalten (12) wenigstens annähernd gleich groß sind.

6. Labyrinthdichtung nach wenigstens einem der Ansprüche 1 bis 5, **dadurch gekennzeichnet, dass** wenigstens zwei Ringelemente (9) einer durchgehenden gemeinsamen Dichtfläche (13) gegenüberstehen.

7. Labyrinthdichtung nach wenigstens einem der Ansprüche 1 bis 6, **dadurch gekennzeichnet, dass** mehrere konische Dichtflächen (13) axial hintereinander an einem Bauteil (8) angeordnet sind.

8. Labyrinthdichtung nach Anspruch 7, **dadurch gekennzeichnet, dass** zwischen benachbarten Dichtflächen (13) radial nach außen gerichtete Abschleuderringe (15) angeordnet sind, die zwischen zugeordnete benachbarte Ringelemente (9) ragen.

## Claims

1. A labyrinth seal between components (7, 8) which are rotatable on an axis (14) in relation to each other and which are axially fixed, with at least two ring-shaped uninterrupted sealing ring gaps (12) arranged axially one behind the other, arranged between a front face (11) of a ring element (9) arranged on one component (7) and an opposing sealing face (13) which is arranged closely adjacent without contacting, on the other component (8), wherein the front face (11) and the sealing face (13) form the envelope surfaces of the associated sealing ring gap (12), wherein at least one envelope surface (11, 13) of at least one sealing ring gap (12) is of conical shape, **characterised in that**, for creating a counter-action against an ingress of fluids from both ends of the labyrinth seal, front faces (11) and sealing faces (13) of sealing ring gaps (12) on one end of the labyrinth seal are formed with an inclination contrary to front faces (11) and sealing faces (13) of sealing ring gaps (12) on the other end of the labyrinth seal.

2. The labyrinth seal according to claim 1, **characterised in that** one front face (11) is of conical shape.

3. The labyrinth seal according to claim 1 or 2, **characterised in that** one sealing face (13) is of conical shape.

4. The labyrinth seal according to at least one of claims 1 to 3, **characterised in that** both envelope surfaces (11, 13) of a sealing ring gap (12) are of conical shape and have the same inclination.

5. The labyrinth seal according to at least one of claims 1 to 4, **characterised in that** the average diameter of at least two adjacently arranged conical sealing ring gaps (12) is approximately the same.

6. The labyrinth seal according to at least one of claims 1 to 5, **characterised in that** at least two ring elements (9) face a continuous shared sealing face (13).

7. The labyrinth seal according to at least one of claims 1 to 6, **characterised in that** several conical sealing faces (13) are arranged axially one behind the other on one component (8).

8. The labyrinth seal according to claim 7, **characterised in that** throw-off rings (15), which are directed radially outward, are arranged between adjacent sealing faces (13), said throw-off rings (15) protruding between associated adjacent ring elements (9).

## Revendications

1. Joint labyrinthe entre deux pièces mécaniques (7, 8) fixes dans le sens axial et pouvant tourner l'une par rapport à l'autre autour d'un axe (14), comportant au moins deux fentes annulaires d'étanchéité (12) ininterrompues de forme annulaire disposées l'une derrière l'autre dans le sens axial chacune entre une surface frontale (11) d'un élément annulaire (9) disposé sur une pièce mécanique (7) et une surface d'étanchéité (13) opposée étroitement adjacente sans contact de l'autre pièce mécanique (8), la surface frontale (11) et la surface d'étanchéité (13) formant les surfaces extérieures de la fente annulaire d'étanchéité (12) associée, au moins une surface enveloppe (11, 13) d'au moins une fente annulaire d'étanchéité (12) étant conçue pour être conique, **caractérisé en ce que**, pour produire une action s'opposant à la pénétration de fluides par les deux extrémités du joint labyrinthe, les surfaces frontales (11) et les surfaces d'étanchéité (13) de fentes annulaires d'étanchéité (12) à une extrémité du joint labyrinthe sont conçues pour présenter une inclinaison opposée par rapport aux surfaces frontales (11) et aux surfaces d'étanchéité (13) de fentes d'étanchéité annulaires (12) à l'autre extrémité du joint labyrinthe.

2. Joint labyrinthe selon la revendication 1, **caractérisé en ce qu'**une surface frontale (11) est conçue pour être conique.

3. Joint labyrinthe selon la revendication 1 ou 2, **caractérisée en ce qu'**une surface d'étanchéité (13) est conçue pour être conique.

4. Joint labyrinthe selon au moins une des revendications 1 à 3, **caractérisé en ce que** les deux surfaces enveloppe (11, 13) d'une fente d'étanchéité annulaire (12) sont conçues pour être coniques et présentent la même inclinaison.

5. Joint labyrinthe selon au moins une des revendications 1 à 4, **caractérisé en ce que** le diamètre moyen d'au moins deux fentes d'étanchéité annulaires (12) coniques adjacentes est au moins approximativement identique.

6. Joint labyrinthe selon au moins une des revendications 1 à 5, **caractérisé en ce qu'**au moins deux éléments annulaires (9) font face à une surface d'étanchéité (13) continue commune.

7. Joint labyrinthe selon au moins une des revendications 1 à 6, **caractérisé en ce que** plusieurs surfaces d'étanchéité (13) coniques sont disposées l'une derrière l'autre dans le sens axial sur une pièce mécanique (8).

8. Joint labyrinthe selon la revendication 7, **caractérisé en ce qu'**entre les surfaces d'étanchéité (13) adjacentes sont disposés des anneaux de projection (15) orientés vers l'extérieur dans le sens radial, qui dépassent entre les éléments annulaires (9) adjacents.
